# EUROPEAN PATENT SPECIFICATION

(11) **EP 3 375 512 B1**
(45) Date of publication and mention of the grant of the patent: **06.04.2022**
(21) Application number: 18156236.4
(22) Date of filing: 12.02.2018
(51) Int. Cl.: B01J 4/02, G01G 13/02, G01G 13/22, B01F 15/02

(54) **DOSING DEVICE**
DOSIERVORRICHTUNG
DISPOSITIF DE DOSAGE

(30) Priority: 14.03.2017 IT 201700027964
(43) Date of publication of application: 19.09.2018
(73) Proprietor: Zanelli S.R.L., 43044 Collecchio (PR) (IT)
(72) Inventor: ZANELLI, Alberto, 43125 PARMA (IT)
(74) Representative: Corradini, Corrado

(56) References cited:
- EP-A1- 1 445 592
- EP-A2- 0 299 522
- DE-A1- 2 849 624
- DE-A1- 19 710 936
- US-A- 2 591 785

## Description

### Technical field

The present invention relates to a dosing device for dosing materials in particular for dosing materials to be mixed together in pre-established quantities.

### Prior art

The need to precisely dose different materials before they are mixed exists in numerous production processes and especially in production processes which aim at making products starting with a paste of various raw materials, as occurs for example, but not only, in the manufacture of brake pads.

To make brake pads, a paste is in fact used made up of ceramic, metal and/or polymer raw materials which are initially dosed in the right proportions and then uniformly mixed inside a mixer.

The dosing of these raw materials is traditionally done with the aid of a container wherein the raw materials are manually loaded one at a time, making sure every time with a weighing scale that the weight of the container has increased by the amount corresponding to the required weight of the raw material just introduced.

A drawback of this procedure consists nevertheless in the fact that it requires a certain effort of concentration by the operators who, to check the quantity of each raw material, must always note down the tare weight of the raw materials already introduced in the container and subtract this tare weight from the weight indicated by the weighing scale.

Although not particularly complicated, this activity does nevertheless represent a potential source of errors and, especially when it has to be repeated numerous times during the workday, can in fact lead to the preparation of mixtures outside the tolerance.

Another drawback also consists in the fact that the raw materials are introduced into the same container.

In fact, when the operator has to remove from the container part of the raw material just introduced into it, e.g. because the pre-established weight has been accidentally exceeded, it can occur that he/she accidentally also removes a part of the other raw materials, with the risk of obtaining a mixture which is outside the tolerance and with the risk of polluting the raw materials that will be dosed later. As an example of known dosing devices, DE 28 49 624 A1 discloses a concrete mixing installation comprising a dosing device for solids of different sorts and a scale measuring the weight of a container with an opening bottom which is adapted to receive solids poured therein.

### Disclosure of the invention

One object of the present invention is to provide a solution which permits solving the aforementioned drawbacks of prior art, which can be applied not only in the preparation of pastes for making brake pads but in any industry where the dosing of different materials is required.

Another object is to achieve the aforementioned objective within the scope of a simple and rational solution with a relatively low cost.

Such objects are achieved by the characteristics of the invention shown in the independent claim 1. The dependent claims delineate preferred and/or particularly advantageous aspects of the invention.

In particular, an embodiment of the present invention makes available a plant for mixing materials which comprises:
- a mixer having an infeed mouth for the materials to be mixed turned vertically upwards and an outfeed for the mixed materials, and
- a dosing device fixed above the infeed mouth of the mixer,
the dosing device comprising:
- an accommodating unit for a material to be dosed, and
- measuring means adapted to measure the weight of the accommodating unit,
wherein said accommodating unit comprises:
- a container body, and
- operating means adapted to operate the container body between a first configuration, wherein the container body defines a support for the material to be dosed, and a second configuration, wherein the container body removes said support allowing said material to fall downwards by gravity into the infeed mouth of the mixer.

This embodiment increases the functionality and the efficiency of the raw material mixers, ensuring that inside them raw materials are supplied which are suitably dosed and therefore that the final mixture corresponds to project specifications.

In fact, thanks to the dosing device, each of these materials can be advantageously dosed in an autonomous and independent way from the others.

In particular, each material can be individually loaded in the container body of the device when it is in the first configuration, weighed by means of the measuring means and then released underneath by simply moving the container body to the second configuration.

This way, the weight detected by the measuring means will only represent the weight of the material in dosing phase, avoiding the operators having to take into account the tare weights or other aspects.

Furthermore, each material to be dosed will be separated from the others, enabling the operators to add and remove quantities of such material, without the risk of polluting the other materials or modifying their quantities in the mixture.

According to the present invention, the support defined by the container body is a concave surface.

This way, the material to be dosed remains effectively confined and contained in a limited space, preventing it to come out of the container body due to accidental causes.

Another aspect of the invention envisages that the above concave surface may be a spherical surface.

The advantage of the spherical shape is that it does not have any areas wherein the material could nest and remain blocked when the container body is brought to the second unloading configuration.

According to a preferred embodiment of the invention, the container body can be mobile in rotation between the first configuration, wherein the concavity of the concave surface is turned upwards, and the second configuration, wherein the concavity of the concave surface is turned downwards.

For example, the container body can be made in the shape of a cradle, preferably monolithic, which is adapted to rotate around a substantially horizontal axis to switch from a loading position, wherein its concavity is turned upwards to receive and sustain the material to be dosed, to an unloading position, wherein the cradle is substantially overturned so as to allow the material to fall downwards.

This way, the dosing device is extremely simple and, at the same time, extremely effective and reliable.

It cannot however be ruled out that, in some embodiments, the container body can comprise at least two portions reciprocally mobile between the first configuration, wherein said portions are close to one another, and the second configuration, wherein said portions are spaced apart.

For example, the container body could be made of two shells which can move between a closed configuration, wherein they are joined to form a cradle with the concavity turned upwards to receive the material to be dosed, and an open configuration, wherein they are reciprocally spaced apart so as to open the bottom of the cradle allowing the material to fall.

To make it easier to unload the material, in this case too it is preferable that the movement of the two shells be an oscillating movement around a horizontal rotation axis, preferably in opposite directions.

According to another aspect of the invention, the operating means of the container body can comprise at least an electric motor and transmission means to connect said electric motor to the container body.

This way, the displacement of the container body from the first to the second configuration can occur in a totally automated way, without any effort for the operators.

It cannot however be ruled out that in some simpler embodiments, the operating means can be of the manual operation type.

A further aspect of the invention envisages that the accommodating unit can comprise a support frame on which are installed abutted the container body and the operating means of the container body.

This solution permits obtaining a very compact unit and which is easy to couple to the weight measuring means.

According to one aspect of the invention, said measuring means can comprise at least a load cell or, more preferably, a plurality of load cells on which the accommodating unit is abutted.

The use of the load cells makes the device efficient and reliable, while always remaining within the scope of a relatively economical solution.

According to a further aspect of the invention, the device can furthermore comprise:
- a protection casing adapted to contain at least the container body and having an access to make the container body accessible from the outside,
- a closing element, and
- second operating means adapted to move said closing element between a first position, wherein the closing element closes the access of the protection casing, and a second position, wherein the closing element leaves the access of the protection casing open.

This protection casing can be left in the open position to allow loading the material to be dosed in the container body, and can be brought to the closing position before moving the container body to the unloading configuration.

This way, the protection casing can perform both a mechanical safety function for operators and the function of avoiding the material being contaminated.

### Brief description of the drawings

Further characteristics and advantages of the invention will appear evident by reading the following description provided by way of example, but not exhaustive, with the aid of the figures on the attached tables.
Figure 1 is a schematic side view of a mixing plant having a dosing device according to one embodiment of the present invention, wherein the dosing device is shown in section.
Figure 2 is an isometric view of the dosing device only.
Figure 3 is an exploded view of the dosing device in figure 2.
Figure 4 is an isometric view of the accommodating unit belonging to the dosing device.

The figures 5 to 10 show the section of the dosing device during an equal number of its operating phases.

### Detailed description

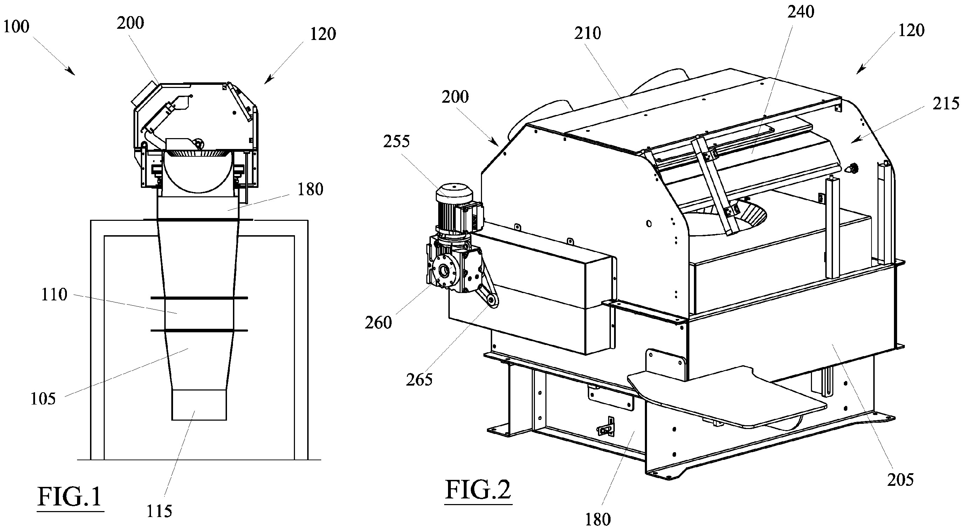

Figure 1 shows a plant 100 for mixing materials, e.g., solid loose materials. The plant 100 schematically comprises a mixer 105, in itself conventional and therefore not shown in detail, which has an infeed mouth 110 for the materials to be mixed and an outfeed mouth 115 for the mixed materials.

With the infeed mouth 110 is associated a dosing device 120, the function of which is to allow the loading, inside the mixer 105, of pre-established quantities of each material to be mixed.

According to the invention, the infeed mouth 110 of the mixer 105 is turned vertically upwards and the dosing device 120 is fixed above said infeed mouth 110, in such a way that each material can fall into the mixer 105 simply by gravity.

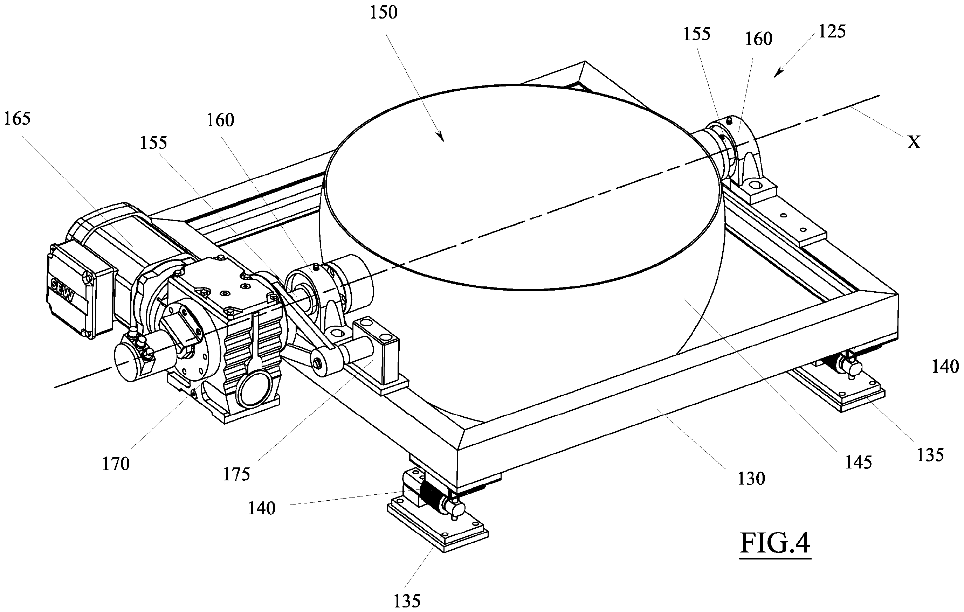

As shown in figure 4, the dosing device 120 generally comprises an accommodating unit, indicated altogether by 125, which is adapted to receive the material to be dosed, and measuring means adapted to measure the weight of the accommodating unit 125.

More in detail, the accommodating unit 125 comprises a support frame 130, which is supported and abutted on a plurality of assembly feet 135 by means of the interposition of an equal number of load cells 140, which define the above measuring means.

In the example shown, the support frame 130 is shaped like a rectangular cornice, e.g., of metal material, and there are four assembly feet 135 arranged at the vertices of the cornice.

Abutted on the support frame 130 a container body 145 is fitted which is preferably placed at the centre of the cornice and can be made of steel, e.g. of stainless steel.

The container body 145 is substantially shaped like a cradle or like a cup with a concave surface 150 closed on the bottom and open at the top.

Preferably, the container body 145 is shaped like a spherical cap the concave surface 150 of which is, precisely, a spherical surface.

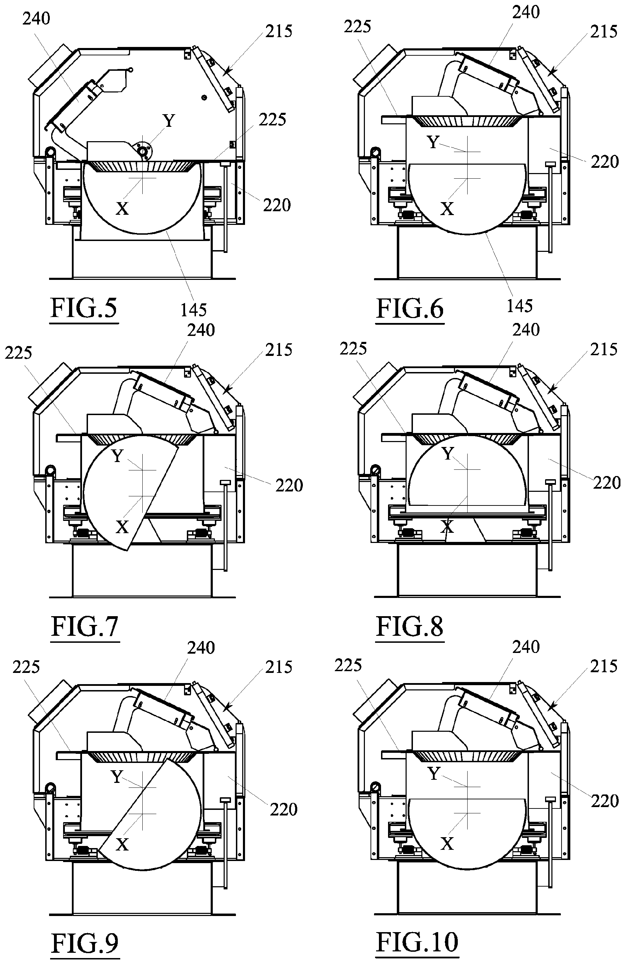

The container body 145 is installed on the support frame 130 by means of articulation means which allow it to rotate around a substantially horizontal axis X between a first position (shown in figure 4), wherein the concavity of the concave surface 150 is turned upwards, and a second position (shown in figure 8), wherein the concavity of the concave surface 150 is turned downwards.

In the example shown, the above articulation means comprise, for example, two coaxial pins 155 with horizontal axis, which protrude on opposite sides of the container body 145 and are rotatably sustained on two opposite sides of the support frame 130 by respective bearing supports 160.

Abutted on the support frame 130 are also installed operating means adapted to operate the container body 145 to swing between the above positions.

These operating means can comprise a motor 165, e.g., an electric motor, and a transmission system, e.g., a gear reduction unit 170, which is adapted to connect the shaft of the motor 165 to one of the pins 155, in such a way that the rotation of the shaft of the motor 165 is transformed into a corresponding rotation of the pin 155 and therefore of the entire container body 145.

In the example shown, the reduction unit 170 and the motor 165 are brought to the outside of the cornice defined by the support frame 130, to which they are firmly fixed by means of a bracket 175 which is directly fixed on one side of the support frame 130 next to the bearing support 160.

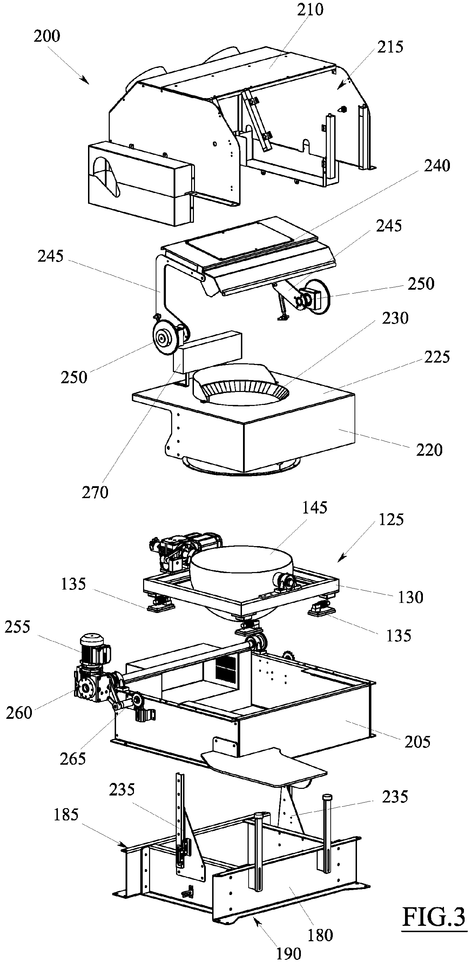

As shown in figure 3, the assembly feet 135 of the accommodating unit 125 can be fitted on a support base 180, which can be defined by a plurality of metal plates arranged to substantially form a rectangular cornice.

In particular, this support base 180 can make available two substantially horizontal flanges, of which one upper flange 185 on which rest and are fixed the assembly feet 135, and a lower flange 190 through which the dosing device 120 can be fixed, for example, to the mixer 105.

The dosing device 120 can also comprise a protection casing for the accommodating unit 125, which is globally indicated by 200 and can be made of a plurality of separate components assembled together.

These components can comprise, for example, a plating 205 which also rests on the upper flange 185 of the support base 180 and laterally envelops the accommodating unit 125.

The protection casing 200 can also comprise a cap 210 which fastens onto the plating 205 leaving an access window 215 open towards the inside and therefore towards the accommodating unit 125.

Inside the protection casing 200 a casing structure 220 is accommodated which is adapted to cover the upper part of the accommodating unit 125.

In particular, this casing structure 220 can make available a substantially horizontal worktable 225, superimposed on the container body 145 and which has a central opening 230, vertically coaxial with respect to the mouth of the container body 145, to allow loading the material to be dosed.

The casing structure 220 is sliding in a vertical direction inside the protection casing 200 from a lowered position (shown in figure 5) to a raised position (shown in figure 6).

In the lowered position, the distance between the casing structure 220 and the accommodating unit 125 is minimal, so that the worktable 225 rests on the edge of the container body 145 when the latter is turned upwards.

In the raised position, the distance between the casing structure 220 and the accommodating unit 125 is maximum, so that the worktable 225 is raised enough to allow the container body 145 to rotate around the axis X and therefore to be turned downwards.

To be able to perform this movement (see fig.3), the casing structure 220 can be connected directly to the support base 180 by means of a pair of brackets 235 which, lifting from the support base 180, insert themselves inside the plating 205 to be slidingly coupled to two lateral sides of the casing structure 220, e.g., by means of suitable guides.

The dosing device 120 also comprises a closing element 240, which can be placed inside the protection casing 200, e.g., between the casing structure 220 and the cap 210.

This closing element 240 can rotate between a first position, wherein it closes the access window 215 of the protection casing 200 (see fig.6), and a second position, wherein the closing element 240 leaves the access window 215 open (see fig.5).

In the example shown, the closing element 240 is articulated by means of brackets 245 and pins 250 to the protection casing 200, e.g., at the base of the cap 210, according to a horizontal rotation axis Y which can be parallel or orthogonal to the rotation axis X of the container body 145.

The operation of the closing element 240 is by means of suitable operating means, which can comprise a motor 255, e.g., an electric motor, and a transmission system, e.g., a gear reduction unit 260, which is adapted to connect the shaft of the motor 255 to one of the pins 250, in such a way that the rotation of the shaft of the motor 255 is transformed into a corresponding rotation of the pins 250, of the brackets 245 and therefore of the entire closing element 240.

The movement of the closing element 240 can also be transmitted, by means of a suitable transmission system (not shown) to the casing structure 220, in such a way that the vertical movement of the latter is operated by the same motor 255.

In particular, the movement transmission can be conceived so that the casing structure 220 moves towards the raised position while the closing element 240 turns towards the closing position and, vice versa, so that the casing structure 220 moves towards the lowered position while the closing element 240 turns towards the opening position.

In the example shown, the reduction unit 260 and the motor 255 are brought to the outside of the protection casing 200 (see fig.2), to which they are firmly fixed by means of a bracket 265 which is directly fixed on a side of the plating 205.

The working of the dosing device 120 requires it to be initially arranged as shown in figure 5, i.e., with the closing element 240 in open configuration, the casing structure 220 in lowered position and the container body 145 with the concavity turned upwards, in such a way that an operator can introduce the first material to be dosed inside the container body 145, e.g., manually.

During the loading of the material, the load cells 140 measure the total weight of the accommodating unit 125 which, net of the tare weight consisting of the empty weight of the accommodating unit 125 itself, indicates the net weight of the material which has been loaded.

This net weight of the loaded material can be easily calculated by an electronic control system connected to the load cells 140 and displayed on a screen 270 (see fig. 2), so that it can be kept constantly under control by the operator.

When the net weight of the material has reached the desired value, the casing structure 220 is brought to the raised position and the closing element 240 to the closed position, as shown in figure 6.

At this point, the container body 145 of the accommodating unit 125 starts to rotate around the axis X (see fig.7) until it takes up the position indicated in figure 8, wherein the container body 145 is turned downwards.

This way, the quantity of previously-dosed material falls downwards by gravity, e.g. inside the mixer 105.

At this point, the container body 145, by now empty, continues to rotate (see fig.9) until it again reaches the initial position wherein its concavity is turned upwards (see fig. 10), after which the closing element 240 is moved to the opening position and the casing structure 220 is lowered so that the device returns to the initial configuration of figure 5, ready to receive a new material to be dosed.

In conclusion, it must be pointed out that, although the dosing device 120 has been described in association with a mixer 105, it could also be associated with other devices. In some embodiments, the dosing device 120 could also be simply set above a container adapted to receive the dosed materials before, if necessary, this is sent to other processing operations.

It cannot be ruled out furthermore that, in other embodiments, the container body 145, instead of being shaped like a spherical cradle, can have any other concave shape, or can comprise at least two portions which, substantially like in the case of hydraulic grabs, are reciprocally mobile between a first configuration, wherein said portions are brought closer together to define a cradle turned upwards to accommodate the material, and a second configuration, wherein said portions are spaced apart so as to open the bottom of the cradle and allow the material to fall.

The device described in the application can be modified in various ways, while remaining within the scope of the invention as claimed.

## Claims

1. A plant (100) for mixing materials, comprising:
- a mixer (105) having an infeed mouth (110) for the materials to be mixed turned vertically upwards and an outfeed mouth (115) for the mixed materials, and
- a dosing device (120) fixed above the infeed mouth (110) of the mixer (105)
wherein the dosing device (120) comprises:
- an accommodating unit (125) for a material to be dosed, and
- measuring means (140) adapted to measure the weight of the accommodating unit;
wherein said accommodating unit (125) comprises:
- a container body (145), and
- operating means adapted to operate the container body (145) between a first configuration, wherein the container body makes available a concave surface (150) for the material to be dosed, and a second configuration, wherein the container body removes said support allowing said material to fall downwards by gravity into the infeed mouth (100) of the mixer (105).

2. A plant (100) according to claim 1, wherein said concave surface (150) is a spherical surface.

3. A plant (100) according to claim 1 or 2, wherein said container body (145) is mobile in rotation between the first configuration, wherein the concavity of the concave surface (150) is turned upwards, and the second configuration, wherein the concavity of the concave surface (150) is turned downwards.

4. A plant (100)according to claim 1 or 2, wherein said container body (145) comprises at least two portions reciprocally mobile between the first configuration, wherein said portions are close to one another, and the second configuration, wherein said portions are spaced apart.

5. A plant (100)according to any one of the preceding claims, wherein said operating means comprise at least an electric motor (165) and transmission means (170) to connect said electric motor to the container body (145).

6. A plant (100)according to any one of the preceding claims, wherein the accommodating unit (125) comprises a support frame (130) on which are installed abutted the container body (145) and the operating means of the container body.

7. A plant (100)according to any one of the preceding claims, wherein the measuring means comprise at least a load cell (140).

8. A plant (100)according to any one of the preceding claims, also comprising:
- a protection casing (200) adapted to contain at least the container body (145) and having an access (215) to make the container body (145) accessible from the outside,
- a closing element (240), and
- second operating means adapted to move said closing element (240) between a first position, wherein the closing element closes the access (215) of the protection casing (200), and a second position, wherein the closing element (240) leaves the access (215) of the protection casing (200) open.

## Patentansprüche

1. Anlage (100) zum Mischen von Materialien, Folgendes umfassend:
- einen Mischer (105), der eine Einspeisungsöffnung (110) für die zu mischenden Materialien, die vertikal nach oben gedreht ist, und eine Ausgabeöffnung (115) für die gemischten Materialien aufweist, und
- eine Dosiervorrichtung (120), die über der Einspeisungsöffnung (110) des Mischers (105) befestigt ist,
wobei die Dosiervorrichtung (120) Folgendes umfasst:
- eine Aufbewahrungseinheit (125) für ein zu dosierendes Material und
- Messmittel (140), die dafür eingerichtet sind, das Gewicht der Aufbewahrungseinheit zu messen,
wobei die Aufbewahrungseinheit (125) Folgendes umfasst:
- einen Behälterkörper (145) und
- Betriebsmittel, die dafür eingerichtet sind, den Behälterkörper (145) zwischen einer ersten Gestaltung, in der der Behälterkörper eine konkave Fläche (150) für das zu dosierende Material zur Verfügung stellt, und einer zweiten Gestaltung, in der der Behälterkörper die Abstützung entfernt, was dem Material gestattet, durch Schwerkraft nach unten in die Einspeisungsöffnung (110) des Mischers (105) zu fallen, zu betreiben.

2. Anlage (100) nach Anspruch 1, wobei die konkave Fläche (150) eine kugelförmige Fläche ist.

3. Anlage (100) nach Anspruch 1 oder 2, wobei der Behälterkörper (145) zwischen der ersten Gestaltung, in der die Konkavität der konkaven Fläche (150) nach oben gedreht ist, und der zweiten Gestaltung, in der die Konkavität der konkaven Fläche (150) nach unten gedreht ist, drehbeweglich ist.

4. Anlage (100) nach Anspruch 1 oder 2, wobei der Behälterkörper (145) mindestens zwei Abschnitte umfasst, die zueinander zwischen der ersten Gestaltung, in der die Abschnitte nahe beieinander liegen, und der zweiten Gestaltung, in der die Abschnitte voneinander beabstandet sind, beweglich sind.

5. Anlage (100) nach einem der vorhergehenden Ansprüche, wobei die Betriebsmittel mindestens einen Elektromotor (165) und Übertragungsmittel (170), um den Elektromotor mit dem Behälterkörper (145) zu verbinden, umfassen.

6. Anlage (100) nach einem der vorhergehenden Ansprüche, wobei die Aufbewahrungseinheit (125) einen Stützrahmen (130) umfasst, an dem anliegend der Behälterkörper (145) und die Betriebsmittel des Behälterkörpers installiert sind.

7. Anlage (100) nach einem der vorhergehenden Ansprüche, wobei die Messmittel mindestens eine Wägezelle (140) umfassen.

8. Anlage (100) nach einem der vorhergehenden Ansprüche, außerdem Folgendes umfassend:
- ein Schutzgehäuse (200), das dafür eingerichtet ist, zumindest den Behälterkörper (145) zu enthalten, und das einen Zugang (215) aufweist, um den Behälterkörper (145) von der Außenseite zugänglich zu machen,
- ein Verschlusselement (240) und
- zweite Betriebsmittel, die dafür eingerichtet sind, das Verschlusselement (240) zwischen einer ersten Position, in der das Verschlusselement den Zugang (215) des Schutzgehäuses (200) verschließt, und einer zweiten Position, in der das Verschlusselement (240) den Zugang (215) des Schutzgehäuses (200) offen lässt, zu bewegen.

## Revendications

1. Installation (100) permettant de mélanger des matériaux, comprenant :
- un mélangeur (105) doté d'une bouche d'entrée (110) pour les matériaux à mélanger tournée verticalement vers le haut et une bouche de sortie (115) pour les matériaux mélangés, et
- un dispositif de dosage (120) fixé au-dessus de la bouche d'entrée (110) du mélangeur (105),
dans lequel le dispositif de dosage (120) comprend :
- une unité résidentielle (125) pour un matériau à doser, et
- des moyens de mesure (140) adaptés pour mesurer le poids de l'unité résidentielle ;
dans lequel ladite unité résidentielle (125) comprend :
- un corps de récipient (145), et
- des moyens d'actionnement adaptés pour faire fonctionner le corps de récipient (145) entre une première configuration, dans laquelle le corps de récipient rend disponible une surface concave (150) pour le matériel à doser, et une deuxième configuration, dans laquelle le corps de récipient retire ledit support permettant audit matériau de tomber par gravité dans la bouche d'entrée (100) du mélangeur (105).

2. Installation (100) selon la revendication 1, dans laquelle la surface concave (150) est une surface sphérique.

3. Installation (100) selon la revendication 1 ou 2, dans laquelle ledit corps de récipient (145) est mobile en rotation entre la première configuration, dans laquelle la concavité de la surface concave (150) est tournée vers le haut, et la deuxième configuration, dans laquelle la concavité de la surface concave (150) est tournée vers le bas.

4. Installation (100) selon la revendication 1 ou 2, dans laquelle ledit corps de récipient (145) comprend au moins deux parties réciproquement mobiles entre la première configuration, dans laquelle lesdites parties sont proches l'une de l'autre, et la deuxième configuration, dans laquelle lesdites parties sont espacées.

5. Installation (100) selon l'une quelconque des revendications précédentes, dans laquelle lesdits moyens d'actionnement comprennent au moins un moteur électrique (165) et des moyens de transmission (170) permettant de connecter ledit moteur électrique au corps de récipient (145).

6. Installation (100) selon l'une quelconque des revendications précédentes, dans laquelle l'unité résidentielle (125) comprend un châssis de support (130) sur lequel sont installés en butée le corps de récipient (145) et les moyens d'actionnement du corps de récipient.

7. Installation (100) selon l'une quelconque des revendications précédentes, dans laquelle les moyens de mesure comprennent au moins une cellule de charge (140).

8. Installation (100) selon l'une quelconque des revendications précédentes, comprenant également :
- un boîtier de protection (200) adapté pour contenir au moins le corps de récipient (145) et ayant un accès (215) pour rendre le corps de récipient (145) accessible de l'extérieur,
- un élément de fermeture (240), et
- des deuxièmes moyens d'actionnement adaptés pour déplacer ledit élément de fermeture (240) entre une première position, dans laquelle l'élément de fermeture ferme l'accès (215) du boîtier de protection (200), et une deuxième position, dans laquelle l'élément de fermeture (240) laisse l'accès (215) du boîtier de protection (200) ouvert.
